# EUROPEAN PATENT APPLICATION

(11) **EP 3 855 739 A1**
(43) Date of publication of application: **28.07.2021**
(21) Application number: 18934192.8
(22) Date of filing: 19.09.2018
(51) Int. Cl.: H04N 19/11, H04N 19/119, H04N 19/70

(54) **VIDEO ENCODING DEVICE, VIDEO ENCODING METHOD, VIDEO ENCODING PROGRAM, VIDEO DECODING DEVICE, VIDEO DECODING METHOD, AND VIDEO DECODING PROGRAM**

(71) Applicant: FUJITSU LIMITED, Kanagawa 211-8588 (JP)
(72) Inventor: YAMORI, Akihiro, Kawasaki-shi, Kanagawa 211-8588 (JP); KAZUI, Kimihiko, Kawasaki-shi, Kanagawa 211-8588 (JP)
(74) Representative: Hoffmann Eitle
(86) International application number: PCT/JP2018/034681
(87) International publication number: WO 2020/059051

(57) **Abstract**

A generation unit changes first prediction mode information to second prediction mode information according to a combination of a shape of a coding target block in an image included in a video and a shape of a coded block that is adjacent to the coding target block. The first prediction mode information is prediction mode information that indicates an intra prediction mode used for coding of the coded block. Then, the generation unit generates candidate information including a candidate value for prediction mode information, by using the second prediction mode information. A prediction unit generates an intra prediction pixel value for the coding target block in a prescribed intra prediction mode. A first coding unit encodes the coding target block by using the intra prediction pixel value . A second coding unit encodes prediction mode information that indicates the prescribed intra prediction mode, by using the candidate information.

## Description

### TECHNICAL FIELD

The present invention is related to a video coding apparatus, a video coding method, a video coding program, a video decoding apparatus, a video decoding method, and a video decoding program.

### BACKGROUND ART

As an international standard for compression coding of video data, H. 265/HEVC (High Efficiency Video Coding) has been known. Hereinafter, H. 265/HEVC may be referred to as HEVC.

In HEVC, two prediction methods, namely the intra prediction and inter prediction are adopted, and as the intra prediction mode, three kinds, namely the planar prediction, the direct current prediction, and the angular prediction are defined.

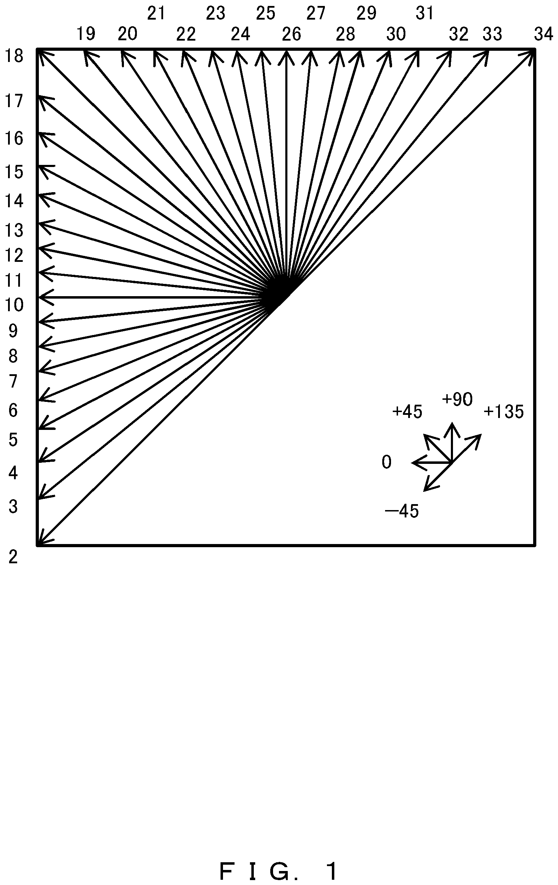

FIG. 1 illustrates angles used in the angular predictions in HEVC. In the intra prediction, a local decoded pixel value of a block that has been coded earlier in the order of raster scan is used as a prediction pixel value, and therefore, the reference direction is one of the directions clockwise from the left-downward direction to the right-upward direction. Assuming the direction that represents the leftward horizontal direction as 0 degrees, the range of angles of the reference directions is the range from -45 degrees to +135 degrees.

Numbers 2 to 34 are assigned sequentially to the respective angles from -45 degrees to +135 degrees, and these numbers represent the 33 patterns of the intra prediction modes of the angular prediction. Meanwhile, 0 and 1 are assigned to the planar prediction and the direct current prediction, respectively. These two intra prediction modes correspond to spatial intra prediction without directionality. In the intra prediction coding, prediction pixel values for the coding target block is generated by performing extrapolation corresponding to the specified reference direction among the 33 patterns of reference directions.

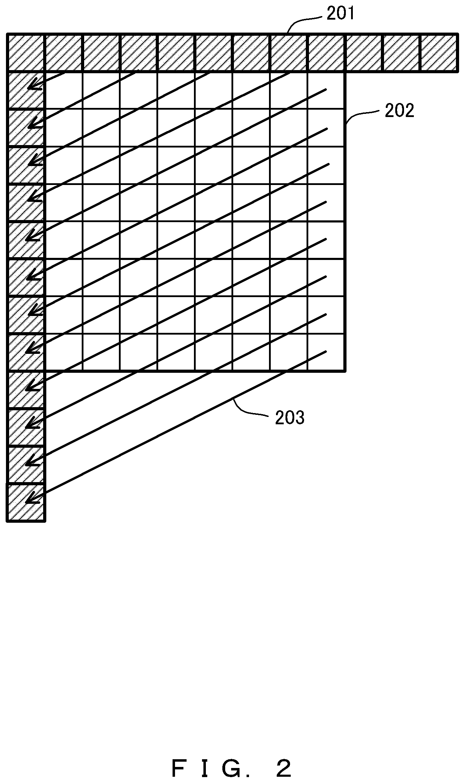

FIG. 2 illustrates an example of the interpolation method in the case of the intra prediction mode "6" (-22.5 degrees) . The upper adjacent block that is adjacent to the upper side of the coding target block and the left adjacent block that is adjacent to the left side of the coding target block are coded blocks. The upper adjacent block is adjacent to the upper side of the two sides of the coding target block in the horizontal direction, and the left-adjacent block is adjacent to the left side of the two sides of the coding target block in the vertical direction.

Adjacent pixels 201 (the squares with slanted lines) are pixels in the upper adjacent block or the left adjacent block, and pixels 202 (the white squares) are pixels in the coding target block. An arrowed line 203 that goes through each pixel 202 represents a reference direction in the intra prediction mode "6".

The pixel value of the adjacent pixel 201 that exists at the end of the arrowed line 203 that goes through each pixel 202 is used as the prediction pixel value of the pixel 202. When a plurality of arrowed lines 203 go through a pixel 202, the weighted addition of the pixel values of the adjacent pixel values that exist at the end of the respective arrowed lines 203 becomes the prediction pixel value.

Currently, as a next international standard for compression coding of video data, works have been underway for the standardization of VVC (Versatile Video Coding) (for example, see Non-Patent Document 1) . The shape of blocks in HEVC is square only, whereas in WC, rectangular blocks are also used to further improve the coding efficiency.

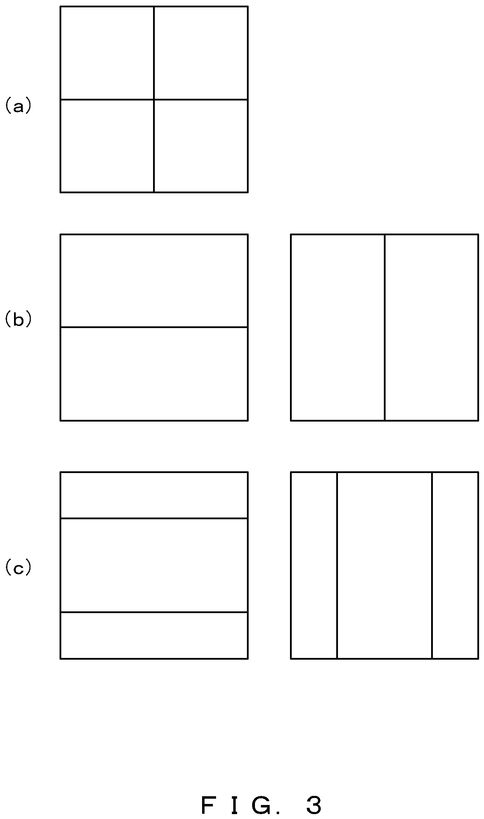

FIG. 3 illustrates examples of block division. FIG. 3, (a) illustrates division into four. In this case, a block whose size in the horizontal direction (width) is W pixels and whose size in the vertical direction (height) is H pixels is divided into four blocks in the same shape. The width of each block after division is W/2 pixels, and its height is H/2 pixels. Hereinafter, the width of W pixels may be referred to as "width W", and the height of H pixels may be referred to as "height H".

FIG. 3, (b) illustrates horizontal division into two and vertical division into two. In the case of horizontal division into two, a block of width W and height H is divided into two blocks in the same shape by a division line in the horizontal direction. The width of each block after division is W pixels, and its height is H/2 pixels. Meanwhile, in the case of vertical division into two, the block of width W and height H is divided into two blocks in the same shape by a division line in the vertical direction. The width of each block after division is W/2 pixels, and its height is H pixels.

FIG. 3, (c) illustrates horizontal division into three and vertical division into three. In the case of horizontal division into three, a block of width W and height H is divided into three blocks by two division lines in the horizontal direction. The width of each block after division is W pixels, the height of the two blocks on the top and the bottom is H/4 pixels, and the height of the block in the middle is H/2 pixels. In the case of vertical division into three, a block of width W and height H is divided into three by two division lines in the vertical direction. The height of each block after division is H pixels, the width of the two blocks on the left and the right is W/4 pixels, and the width of the block in the middle is W/2 pixels.

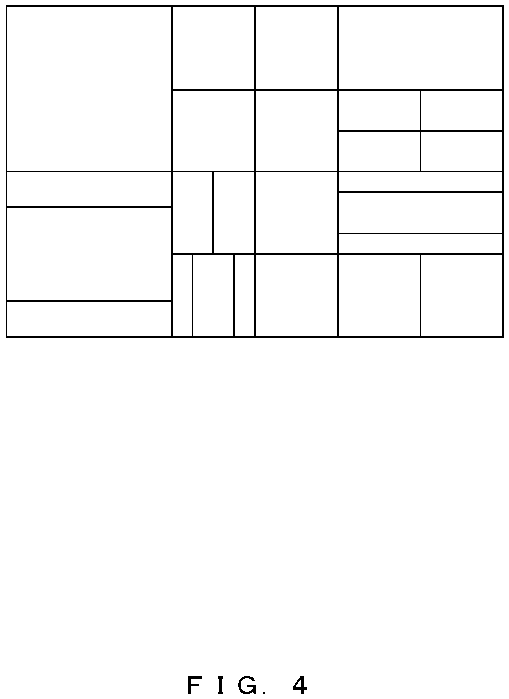

FIG. 4 illustrates an example of block division of an image. As illustrated in FIG. 4, in WC, not only square blocks but also rectangular blocks are available. As the ratio of the height and the width (aspect ratio), not only 1:2 and 2:1 but also other aspect ratios may also be used.

In addition, a technique has also been known that improves the subjective image quality and the coding efficiency by using nearer decoded pixels (for example, see Patent Document 1) .

### PRIOR ART DOCUMENTS

### PATENT DOCUMENT

Patent Document 1: Japanese Laid-Open Patent Publication No. 2016-027756

### NON-PATENT DOCUMENT

Non-Patent Document 1: "Versatile Video Coding (Draft 2)", JVET-K1001, JVET of ITU-T SG 16 WP 3 and ISO/IEC JTC 1/SC 29/WG 11, July 2018

### SUMMARY OF THE INVENTION

### PROBLEMS TO BE SOLVED BY THE INVENTION

In the coding method of parameters that represent the intra prediction modes in WC, in a similar manner as in HEVC, an MPM list is used that includes three Most Probable Modes (MPM) as entries. An MPM is used as a candidate value (prediction value) for the intra prediction mode in a coding target block.

However, when the shape of an adjacent block and the shape of a coding target block are different, an appropriate MPM is not necessarily set by the generation method for the MPM list in the current WC.

Meanwhile, such a problem arises not only in video coding adopting VVC but also in other video codings that adopt intra prediction for rectangular blocks.

In an aspect, an objective of the present invention is to set an appropriate candidate value in video coding using the candidate value for an intra prediction mode for a rectangular block.

### MEANS FOR SOLVING THE PROBLEMS

In a proposal, a video coding apparatus includes a generation unit, a prediction unit, a first coding unit, and a second coding unit.

The generation unit changes first prediction mode information to second prediction mode information according to a combination of a shape of a coding target block in an image included in a video and a shape of a coded block that is adjacent to the coding target block. The first prediction mode information is prediction mode information that indicates an intra prediction mode used for the coding of the coded block. Then, the generation unit generates candidate information including a candidate value for prediction mode information, by using the second prediction mode information.

The prediction unit generates an intra prediction pixel value for the decoding target block in a prescribed intra prediction mode. The first coding unit encodes the coding target block by using the intra prediction pixel value, and the second coding unit encodes prediction mode information that indicates the prescribed intra prediction mode, by using the candidate information.

### EFFECT OF THE INVENTION

According to an embodiment, an appropriate candidate value may be set in video coding using the candidate value for an intra prediction mode for a rectangular block.

### BRIEF DESCRIPTION OF DRAWINGS

FIG. 1 is a drawing illustrating angles used in the angular predictions in HEVC.
FIG. 2 is a drawing illustrating an extrapolation method.
FIG. 3 is a drawing illustrating block division in VVC.
FIG. 4 is a drawing illustrating block division of an image.
FIG. 5 is a drawing illustrating angles used in the angular predictions in VVC.
FIG. 6 is a drawing illustrating intra prediction modes assigned to the angular predictions.
FIG. 7 is a drawing illustrating intra prediction modes added for a rectangular block.
FIG. 8 is a drawing illustrating the angular predictions for a rectangular block.
FIG. 9 is a functional configuration diagram of a video coding apparatus.
FIG. 10 is a functional configuration diagram of a video decoding apparatus.
FIG. 11 is a functional configuration diagram illustrating a specific example of a video coding apparatus.
FIG. 12 is a functional configuration diagram of an intra prediction unit in a video coding apparatus.
FIG. 13 is a diagram illustrating a changing method for a first intra prediction mode.
FIG. 14 is a flowchart of a video coding process.
FIG. 15 is a flowchart of an intra prediction process in a video coding apparatus.
FIG. 16 is a drawing illustrating a first adjacent block decision method.
FIG. 17 is a drawing illustrating a second adjacent block decision method.
FIG. 18 is a drawing illustrating a third adjacent block decision method.
FIG. 19 is a functional configuration diagram illustrating a specific example of a video decoding apparatus.
FIG. 20 is a functional configuration diagram of an intra prediction unit in a video decoding apparatus.
FIG. 21 is a flowchart of a video decoding process.
FIG. 22 is a flowchart of an intra prediction process in a video decoding apparatus.
FIG. 23 is a configuration diagram of an information processing apparatus.

### DESCRIPTION OF EMBODIMENTS

Hereinafter, embodiments are explained in detail with reference to the drawings.

When intra prediction is performed for a rectangular block that is not square, the angular predictions (-45 degrees to +135 degrees) of HEVC may be insufficient. Therefore, VVC handles this problem by extending the range of angles of the angular predictions for a rectangular block.

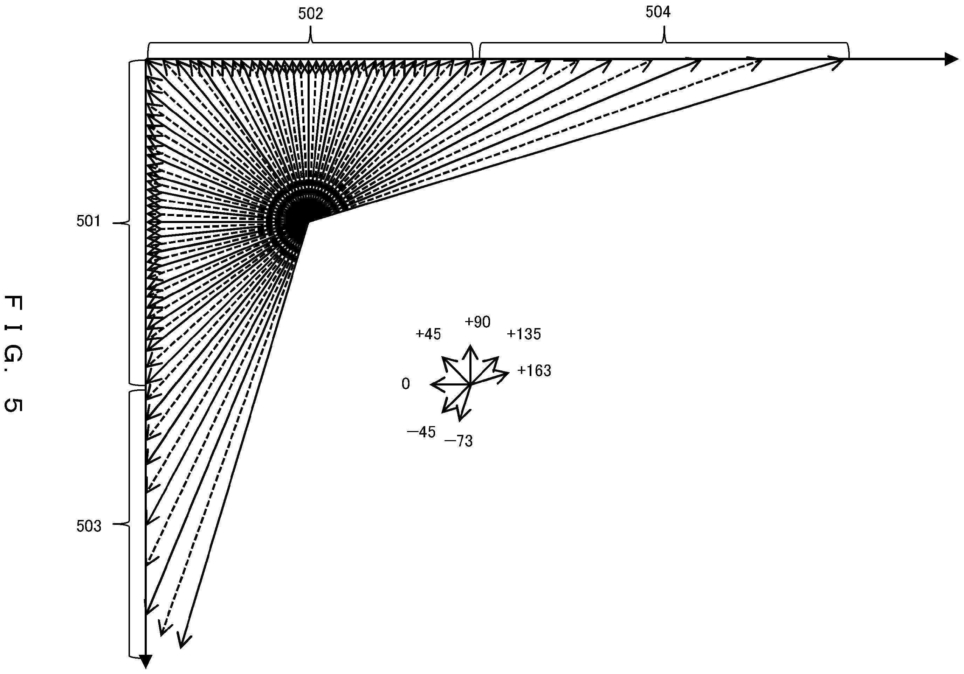

FIG. 5 illustrates angles used in the angular predictions in VVC. In VVC, in order to double the accuracy of the angular prediction in HEVC, the intervals between angles used are reduced to 1/2. Furthermore, the angles in the ranges of -73 to -45 degrees and +135 to +163 degrees are added as reference directions for a rectangular block.

An angle range 501 represents the angular predictions of -45 to + 45 degrees (33 patterns) for square and rectangular blocks, and an angle range 502 represents the angular predictions of +45 to +135 degrees (32 patterns) for square and rectangular blocks. An angle range 503 represents the angular predictions of -73 to -45 degrees (10 patterns) added for a rectangular block, and an angle range 504 represents the angular predictions of +135 degrees to +163 degrees (10 patterns) added for a rectangular block. Adding the planar prediction and the direct current prediction to the total of 85 patterns of angular predictions, the total number of the patterns of the intra prediction modes is 87.

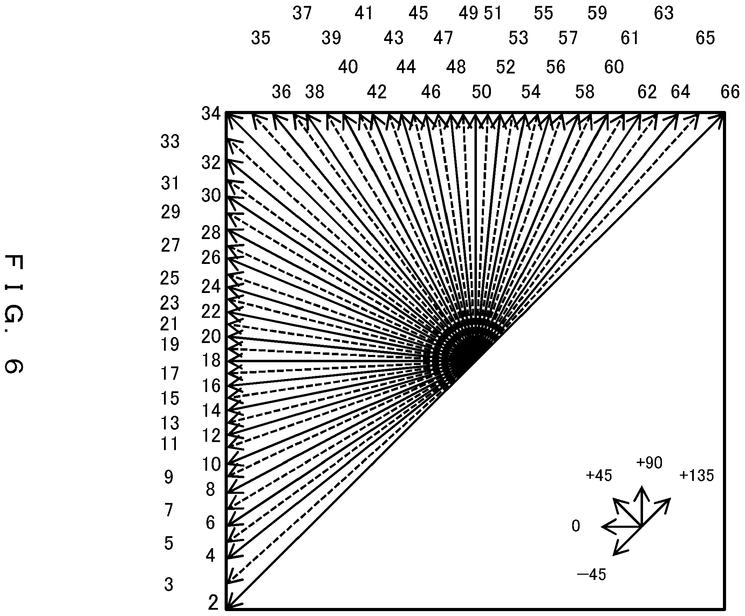

FIG. 6 illustrates the intra prediction modes assigned to the angular predictions in the angle range 501 and the angle range 502 in FIG. 5. The numbers from 2 to 66 are sequentially assigned to the respective angles from -45 degrees to +135 degrees, and these numbers represent 65 patterns of the intra prediction modes. In the same manner as in the case of HEVC, 0 and 1 are assigned to the planar prediction and the direct current prediction, respectively.

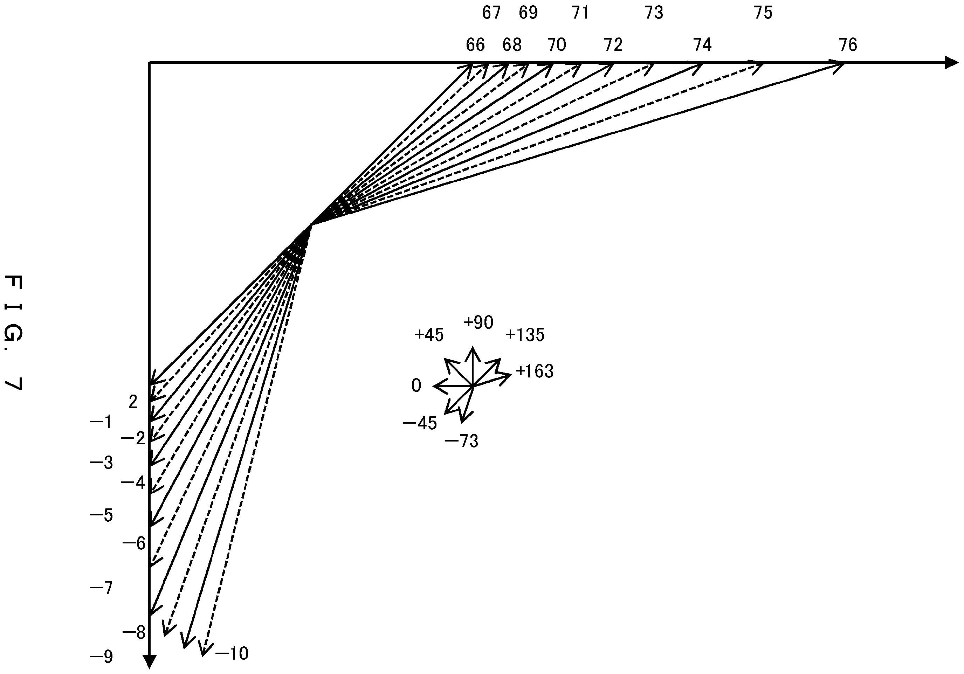

FIG. 7 illustrates the intra prediction modes assigned to the angular predictions in the angle range 503 and the angle range 504 in FIG. 5. The numbers from 67 to 76 are sequentially assigned to the respective angles from immediately after +135 degrees to +163 degrees, and the numbers from -10 to -1 are sequentially assigned to the respective angles from -73 degrees to an angle immediately before -45 degrees. The angular predictions 67 to 76 are used for a laterally long block whose width is greater than its height, and the angular predictions -10 to -1 are used for a vertically long block whose height is greater than its width.

By increasing the total number of the intra prediction modes, it becomes possible to reduce the prediction error in the intra prediction, but it increases the bit amount of a parameter that indicates an intra prediction mode. In attempting to improve the coding performance, it is desirable to balance the reduction in the prediction error and the increase in the bit amount of a parameter.

In the case of the intra prediction in WC, the total number of the intra prediction modes increases from 67 to 87 for a rectangular block. However, the total number of intra prediction modes that may be selected for each block is kept at 67 by assigning the numbers of angular predictions that have a low prediction efficiency with respect to a rectangular block to the added angular predictions.

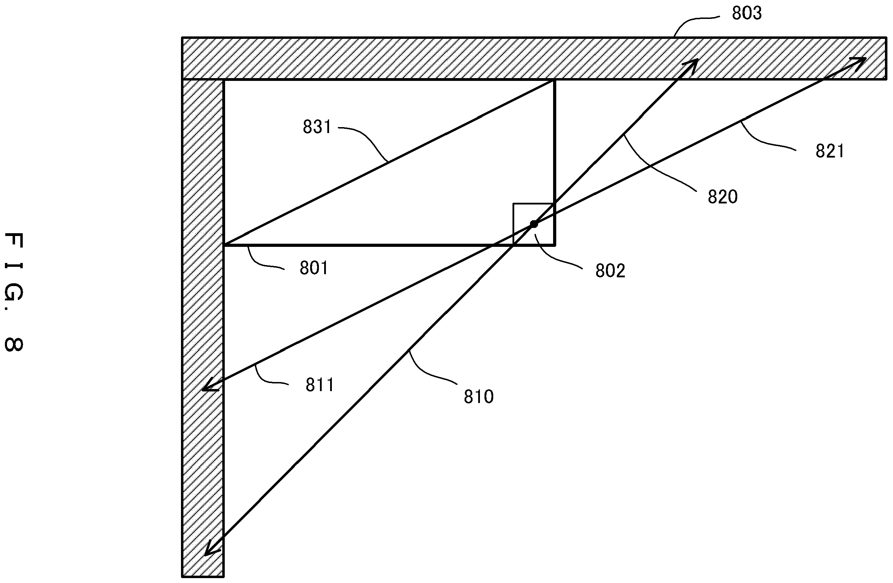

FIG. 8 illustrates an example of angular predictions for a rectangular block. A coding target block 801 is a laterally long block having an aspect ratio of 1:2, and a pixel 802 is located at the right bottom corner in the coding target block 801. The upper adjacent block that is adjacent to the upper side of the coding target block and the left adjacent block that is adjacent to the left side of the coding target block are coded blocks. Adjacent pixels 803 (slanted lines) are pixels that are in the upper adjacent block or the left adjacent block and referred to in the intra prediction.

An arrow 810, an arrow 811, an arrow 820, and an arrow 821 indicate the reference directions -45 degrees, -30 degrees, +135 degrees, and +150 degrees, respectively. Among these, the arrow 811 and the arrow 821 indicate the reference directions that are parallel to a diagonal line 831 that connects the bottom left vertex and the top right vertex of the coding target block 801. When the pixel 802 is the prediction target pixel, the adjacent pixel 803 pointed to by each arrow is used as a reference pixel, and the pixel value of the adjacent pixel 803 is used as a prediction pixel value of the pixel 802.

Here, the prediction efficiency of the angular prediction is inversely proportional to the distance between the prediction target pixel and the reference pixel. That is, it is expected that the closer the distance between the prediction target pixel and the reference pixel, the smaller the prediction error, improving the prediction efficiency. As a result, the coding efficiency for the prediction target pixel is improved.

The length of each of the arrows in FIG. 8 represents the distance between the prediction target pixel and the reference pixel. For example, the length of the arrow 810 is longer than the length of the arrow 820 that exists on its extended line. Hypothetically, assuming the coding target block 801 as square, the length of the two becomes the same. Meanwhile, the length of the arrow 811 is the same as the length of the arrow 821 that exists on its extended line.

According to the above, it is understood that, in a block having an aspect ratio of 1:2, the prediction efficiency is low and the probability to be selected in the intra prediction is low with the angular predictions in the range of -30 degrees to -45 degrees. For example, when a uniform texture exists around the coding target block 801, and its edge direction is parallel to the arrow 810 and the arrow 820, improvement in the prediction efficiency is expected by selecting the reference direction of the arrow 820 instead of the reference direction of the arrow 810.

When extending the angular predictions, by performing the reassignment of the numbers using the unique characteristics of a rectangular block described above, the total number of available angular predictions may be maintained without reducing the prediction efficiency.

A reassignment method for the numbers of angular predictions is explained using FIG. 5 through FIG. 7. In the reassignment of the numbers, among the angular predictions illustrated in FIG. 6, the numbers of the angular predictions with a low efficiency with respect a rectangular block are assigned to the angular predictions illustrated in FIG. 7.

For example, when the coding target block is a laterally long block, angles obtained by inverting the ten patterns of angles in the angle range 504 with a rotation of approximately 180 degrees are not to be used. Specifically, the ten patterns of angles upward from the bottom of the angle range 501 are not used, and the numbers 2 to 11 of these angles are assigned respectively to the angles 67 to 76 in the angle range 504.

Meanwhile, when the coding target block is vertically long block, angles obtained by inverting the ten patterns of angles in the angle range 503 with a rotation of approximately 180 degrees are not to be used. Specifically, the ten patterns of angles leftward from the right of the angle range 502 are not used, and the numbers 57 to 66 of these angles are assigned respectively to the angles -10 to -1 in the angle range 503.

Meanwhile, regarding the angular predictions 12 to 56, the same numbers as the original numbers are assigned by the reassignment, regardless of the shape of the coding target block.

Hereinafter, the numbers 0 to 66 after reassignment may be referred to as the first intra prediction modes, and the numbers -10 to 76 before reassignment may be referred to as the second intra prediction modes . The first intra prediction modes are an example of prediction mode information. The numbers of the second intra prediction modes represent the angles illustrated in FIG. 6 and FIG. 7.

When a parameter representing the first intra prediction mode is coded using an MPM list, the first intra prediction modes of the left adjacent block and the upper adjacent block that have a high correlation with the first intra prediction mode of the coding target block are used as an entry of the MPM list. In addition, the planar prediction and the direct current prediction that are likely to be selected in the coding target block are also used as an entry of the MPM list. Different first intra prediction modes are set respectively in the three entries of the MPM list. Then, one of the three entries is specified by two-bit syntax element IntraLumaMPMIdx.

When any of the entries of the MPM list does not correspond to the first intra prediction mode of the coding target block, the first intra prediction mode of the coding target block is directly coded by syntax element IntraLumaMPMRemainder.

At this time, subtracting the total number 3 of the first intra prediction modes for which signaling may be performed by the MPM list from the total number 67 of the first intra prediction modes that may be selected in each block, the subtraction result is 64. Therefore, the total number of the first intra prediction modes expressed by IntraLumaMPMRemainder is 64. Since Log2(64)=6, the minimum number of bits of IntraLumaMPMRemainder is 6 bits.

In the VCC standard, the procedures in which a video coding apparatus derives IntraLumaMPMRemainder from IntraDir that indicates the first intra prediction mode are as follows.
(P1) The video coding apparatus sets the value of IntraDir in IntraLumaMPMRemainder.
(P2) The video coding apparatus sorts the entries of the MPM list in an ascending order and generates mpm_sort[i] (i=0..2, mpm_sort[0]<mpm_sort[1]<mpm_sort[2]).
(P3) The video coding apparatus sequentially compares mpm_sort[i] and IntraLumaMPMRemainder and decrements IntraLumaMPMRemainder by 1 if mpm_sort[i]<=IntraLumaMPMRemainer.

The value of IntraLumaMPMRemainder that is eventually obtained is smaller by up to 3 than the value of IntraDir.

Meanwhile, the procedures in which a video decoding apparatus derives IntraDir from IntraLumaMPMRemainder are as follows.
(P11) The video decoding apparatus sets the value of IntraLumaMPMRemainder in IntraDir.
(P12) The video decoding apparatus generates mpm_sort[i] in a similar manner as in the procedure (P2).
(P13) The video decoding apparatus sequentially compares mpm_sort[i] and IntraDir and increments IntraDir by 1 if mpm_sort[i]<=IntraDir.

The value of IntraDir eventually obtained is greater by up to 3 than the value of IntraLumaMPMRemainder.

Next, a generation method for the MPM list in the VVC standard is explained. IntraDir of the left adjacent block and IntraDir of the upper adjacent block are assumed as candIntraPredModeA and candIntraPredModeB, respectively, and the value of the i-th entry (i=0,1,2) of the MPM list as candModeList[i]. At this time, candModeList[0] through candModelist[2] are decided as follows.
· When (candIntraPredModeA == candIntraPredMOdeB) and (candIntraPredModeA < 2)
   candModelist[0] = 0
   candModeList[1] = 1
   candModeList[2] = 50
· When (candIntraPredModeA == candIntraPredMOdeB) and (candIntraPredModeA >= 2)
   candModeList[0] = candIntraPredModeA
   candModeList[1] = 2 + ((candIntraPredModeA + 61) % 64)
   candModeList[2] = 2 + ((candIntraPredModeA - 1) % 64)
· When (candIntraPredModeA != candIntraPredMOdeB) candModeList[0] = candIntraPredModeA
   candModeList[1] = candIntraPredModeB
When (candModeList[0] != 0) and (candModeList[1] != 0)
   candModeList[2] = 0
When (candModeList[0] != 1) and (candModeList[1] != 1)
   candModeList[2] = 1

In other cases than the above
candModeList[2] = 50

Here, "% 64" represents the remainder of a division in which the divisor is 64. According to this generation method, candIntraPredModeA or candIntraPredModeB may be used as an MPM in some cases.

However, when the aspect ratio of the adjacent block (the left adjacent block or the upper adjacent block) and the aspect ratio of the coding target block are different, an angular prediction that is available in the adjacent block may be unavailable in the coding target block in some cases.

For example, a case is assumed in which the adjacent block is a vertically long block and the coding target block is a square block. When the second intra prediction mode of the adjacent block is "-8", the corresponding first intra prediction mode is "59".

However, from the viewpoint of continuity of reference directions between blocks, as the candidate value for the first intra prediction mode of the square coding target block, "2" that is the number closest to the angle represented by the second intra prediction mode "-8" is more suitable, among the angular predictions illustrated in FIG. 6. It is expected that the closer the angle of the reference direction, the smaller the prediction error, and therefore, the probability that the reference direction will be selected in the coding target block becomes higher.

Therefore, when the aspect ratio of the adjacent block and the aspect ratio of the coding target block are different, it is desirable to generate the MPM list in consideration with the continuity of reference directions between blocks.

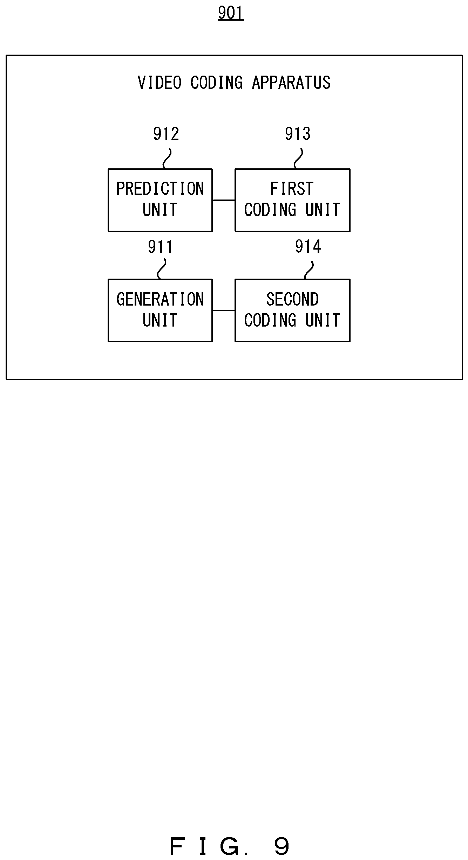

FIG. 9 illustrates a functional configuration example of a video coding apparatus of an embodiment. A video coding apparatus 901 in FIG. 9 includes a generation unit 911, a prediction unit 912, a first coding unit 913, and a second coding unit 914.

The generation unit 911 changes first prediction mode information to second prediction mode information according to a combination of a shape of a coding target block in an image included in a video and a shape of a coded block adjacent to the coding target block. The first prediction mode information is prediction mode information that indicates an intra prediction mode used for coding of the coded block. Then, the generation unit 911 generates candidate information that includes a candidate value for prediction mode information, by using the second prediction mode information.

The prediction unit 912 generates an intra prediction pixel value for the coding target block in a prescribed intra prediction mode. The first coding unit 913 encodes the coding target block by using the intra prediction pixel value, and the second coding unit 914 encodes prediction mode information that indicates the prescribed intra prediction mode.

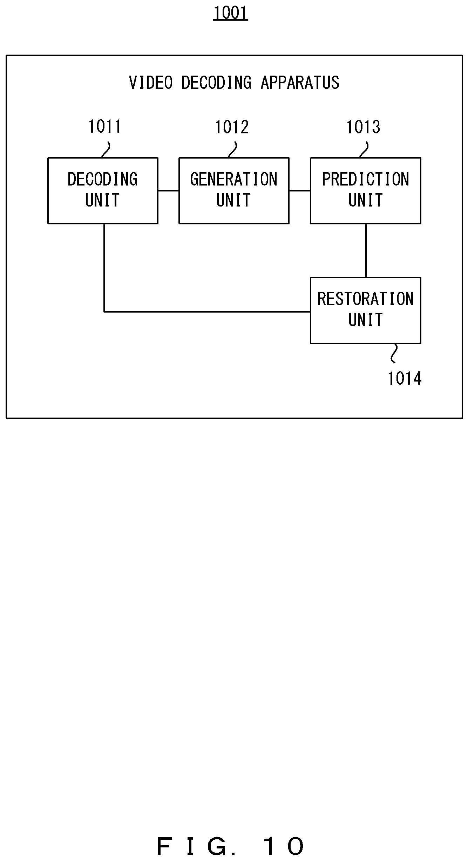

FIG. 10 illustrates a function configuration example of a video decoding apparatus of an embodiment. A video decoding apparatus 1001 in FIG. 10 includes a decoding unit 1011, a generation unit 1012, a prediction unit 1013, and a restoration unit 1014.

The decoding unit 1011 decodes a coded video and extracts prediction residual information of a decoding target block in a coded image included in a coded video. Further, the decoding unit 1011 extracts prediction mode information that indicates an intra prediction mode of the decoding target block and first prediction mode information that indicates an intra prediction mode of a decoded block that is adjacent to the decoding target block.

The generation unit 1012 changes the first prediction mode information to second prediction mode information according to a combination of a shape of the decoding target block and a shape of the decoded block and generates candidate information that includes a candidate value for prediction mode information, by using the second prediction mode information.

The prediction unit 1013 generates an intra prediction pixel value for the decoding target block in the intra prediction mode indicated by the prediction mode information of the decoding target block, by using the candidate information. The restoration unit 1014 generates a pixel value of the decoding target block by using the intra prediction pixel value and the prediction residual information.

According to the video coding apparatus 901 in FIG. 9 and the video decoding apparatus 1001 in FIG. 10, an appropriate candidate value may be set in video coding using the candidate value for an intra prediction mode for a rectangular block.

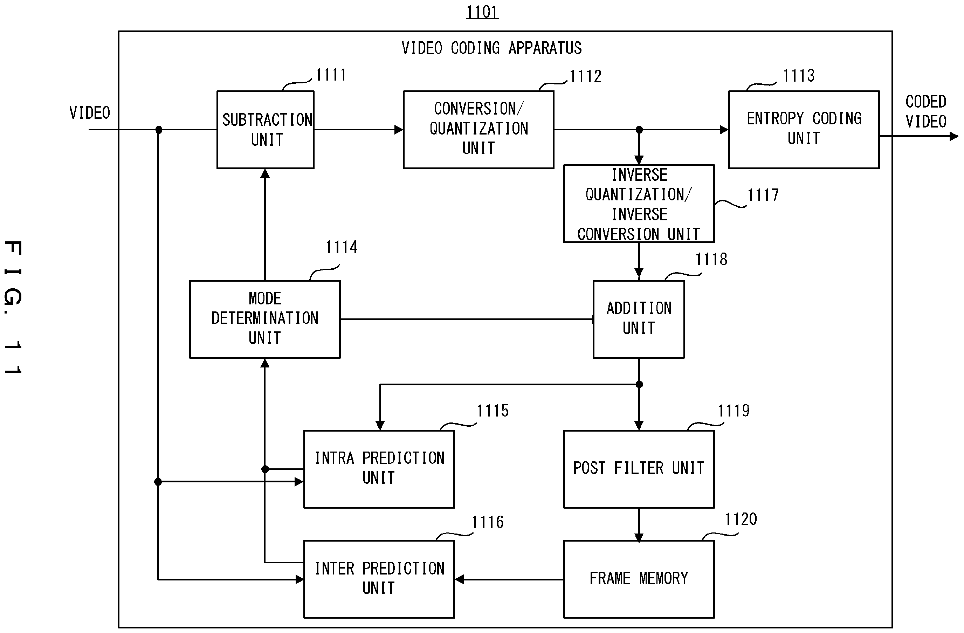

FIG. 11 illustrates a specific example of the video coding apparatus 901 in FIG. 9. A video coding apparatus 1101 in FIG. 11 includes a subtraction unit 1111, a conversion/quantization unit 1112, and an entropy coding unit 1113, a mode determination unit 1114, an intra prediction unit 1115, and an inter prediction unit 1116. The video coding apparatus 1101 further includes an inverse quantization/inverse conversion unit 1117, an addition unit 1118, a post filter unit 1119, and a frame memory 1120. The subtraction unit 1111 and the conversion/quantization unit 1112 correspond to the first coding unit 913 in FIG. 9.

The video coding apparatus 1101 may be implemented as a hardware circuit, for example. In this case, the respective constituent elements of the video coding apparatus 1101 may be implemented as separate circuits or may be implemented as a single integrated circuit.

The video coding apparatus 1101 encodes an input video and outputs a coded video as a coded stream. The video coding apparatus 1101 may transmit the coded stream to the video decoding apparatus 1001 in FIG. 10 via a communication network.

For example, the video coding apparatus 1101 may be incorporated in a video camera, a video transmission apparatus, a video telephone system, a computer, or a mobile terminal apparatus.

The input video includes a plurality of images that correspond respectively to a plurality of times. The image of each time may also be referred to as a picture or a frame. Each image may be a color image or may also be a monochrome image. In the case of a color image, the pixel value may be in the RGB format or may also be in the YUV format.

By implementing, in the video coding apparatus, the same local decoding process as the decoding process in the video decoding apparatus, the same prediction image may be generated in the video coding apparatus and in the video decoding apparatus from a parameter that indicates the prediction mode and the prediction residual information. In this case, only difference information may be transmitted as the coded stream, and therefore, video coding with a high compression efficiency is realized. The inverse quantization/inverse conversion unit 1117, the addition unit 1118, the post filter unit 1119, and the frame memory 1120 are used for the local decoding process in the image coding apparatus 901.

Each image is divided into unit blocks of a prescribed size, and coding is performed in units of each unit block in the order of raster scan. The unit block as is may be used as a coding target block in some cases, and a block obtained by further dividing the unit block into smaller blocks may be used as a coding target block in some cases. Then, intra prediction or inter prediction is performed for the coding target block.

In the case of intra prediction, the predicted image of the coding target block in each intra prediction mode is generated using adjacent pixels in the upper adjacent block or the left adjacent block, and the intra prediction mode with the highest prediction efficiency is used. As the intra prediction modes, the planar prediction, the direct current prediction, and the angular predictions illustrated in FIG. 5 are used, and the parameter that indicates the intra prediction mode with the highest prediction efficiency and the prediction residual information are transmitted as a coded stream.

In the case of inter prediction, an image that has been coded previously is set as a reference image, and by performing a block matching process between the coding target block and reference blocks in the reference image by motion vector search, the reference block with the highest prediction efficiency is detected. Then, information of the reference image and information of the motion vector that indicates the position of the detected reference block are transmitted as parameters that indicate the inter prediction mode, and the difference between the reference block and the coding target block is transmitted as the prediction residual information.

The intra prediction unit 1115 calculates the intra prediction pixel value for the coding target block using a decoded pixel value before the application of a post filter that is output from the addition unit 1118 and outputs the intra prediction pixel value to the mode determination unit 1114. The inter prediction unit 1116 calculates the inter prediction pixel value for the coding target block using a pixel value of the reference image that is output from the frame memory 1120 and outputs the inter prediction pixel value to the mode determination unit 1114.

One type of coding process is applied to one coding target block, and therefore, the mode determination unit 1114 determines which of the intra prediction and the inter prediction has a higher prediction efficiency and selects the prediction result of the one that has a higher prediction efficiency. Then, the mode determination unit 1114 outputs, to the subtraction unit 1111 and the addition unit 1118, the prediction pixel value of the selected prediction result among the intra prediction pixel value and the inter prediction pixel value.

The subtraction unit 1111 outputs, to the conversion/quantization unit 1112, the difference between the pixel value for the coding target block and the prediction pixel value that is output from the mode determination unit 1114 as the prediction residual. The conversion/quantization unit 1112 performs orthogonal conversion and quantization of the prediction residual and outputs a quantized coefficient as the prediction residual information to the entropy coding unit 1113 and the inverse quantization/inverse conversion unit 1117.

The entropy coding unit 1113 converts the quantized coefficient and a parameter that indicates the selected intra prediction mode or the selected inter prediction mode into a binary string by entropy coding (variable-length coding) and outputs a coded video.

The inverse quantization/inverse conversion unit 1117 performs inverse quantization and inverse orthogonal conversion of the quantized coefficient to restore the prediction residual and outputs the restored prediction residual to the addition unit 1118. The addition unit 1118 adds the prediction pixel value that is output from the mode determination unit 1114 and the prediction residual that is output from the inverse quantization/inverse conversion unit 1117 to generate a decoded pixel value before the application of a post filter. Then, the addition unit 1118 outputs the generated decoded pixel value to the post filter unit 1119 and the intra prediction unit 1115.

The post filter unit 1119 applies a post filter to the decoded pixel value before the application of a post filter to reduce the quantization error and to generate the decoded pixel value after the application of a post filter. Then, the post filter unit 1119 outputs the generated decoded pixel value to the frame memory 1120.

The frame memory 1120 stores the decoded pixel value after the application of a post filter as a local decoded pixel value. The local decoded pixel value stored by the frame memory 1120 is output to the inter prediction unit 1116 as a pixel value of the reference image.

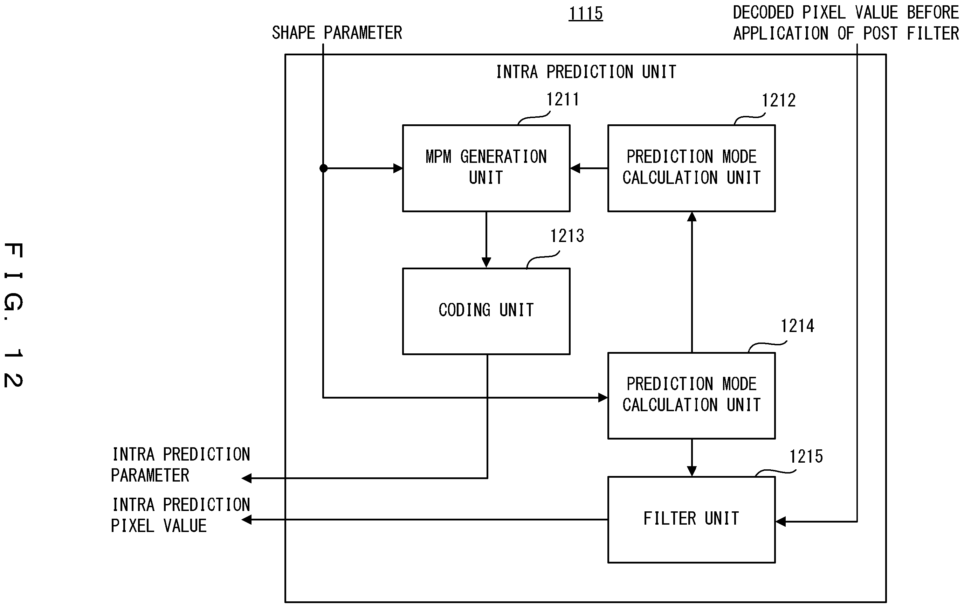

FIG. 12 illustrates a functional configuration example of the intra prediction unit 1115 in FIG. 11. The intra prediction unit 1115 in FIG. 12 includes an MPM generation unit 1211, a prediction mode calculation unit 1212, a coding unit 1213, a prediction mode calculation unit 1214, and a filter unit 1215. The MPM generation unit 1211, the coding unit 1213, and the filter unit 1215 corresponds to the generation unit 911, the second coding unit 914, and the prediction unit 912 in FIG. 9, respectively.

To the MPM generation unit 1211 and the prediction mode calculation unit 1214, shape parameters that indicate the shapes of the coding target block, the left adjacent block, and the upper adjacent block are input from a coding control unit that is not illustrated in the drawing. As a shape parameter, width W and height H of each block are used.

To the MPM generation unit 1211, the first intra prediction modes of the coding target block, the left adjacent block, and the upper adjacent block are input from the prediction mode calculation unit 1212. According to the combination of the shape of the coding target block and the shape of each adjacent block, the MPM generation unit 1211 changes the first intra prediction mode of the adj acent block. Meanwhile, the first intra prediction mode of an adjacent block for which the inter prediction mode has been selected is regarded as the direct current prediction.

Then, the MPM generation unit 1211 generates an MPM list using the first intra prediction modes of the left adjacent block and the upper adjacent block after the change and outputs the generated MPM list and the first intra prediction mode of the coding target block to the coding unit 1213. The MPM list is an example of candidate information that includes a candidate value for prediction mode information.

The prediction mode calculation unit 1214 decides the second intra prediction mode with the highest prediction efficiency with respect to the coding target block, by performing a search process in which the prediction efficiencies of all the second intra prediction modes are calculated. Then, the prediction mode calculation unit 1214 outputs the decided second intra prediction mode to the prediction mode calculation unit 1212 and the filter unit 1215.

The prediction mode calculation unit 1212 converts the second intra prediction mode that is output from the prediction mode calculation unit 1214 to the first intra prediction mode and outputs the first intra prediction mode to the MPM generation unit 1211. Accordingly, the number of the second intra prediction mode that indicates each angle illustrated in FIG. 6 and FIG. 7 is converted to the number of the first intra prediction mode.

The filter unit 1215 applies, to the decoded pixel value before the application of a post filter, a filter corresponding to the second intra prediction mode that is output from the prediction mode calculation unit 1214, to generate an intra prediction pixel value for the coding target block. Then, the filter unit 1215 outputs the generated intra prediction pixel value to the mode determination unit 1114. The filters corresponding to the second intra prediction modes are defined by the VVC standard.

The coding unit 1213 encodes the first intra prediction mode of the coding target block using the MPM list, to generate an intra prediction parameter that indicates the first intra prediction mode. Then, the coding unit 1213 outputs the generated intra prediction parameter to the mode determination unit 1114. As the intra prediction parameter, IntraLumaMPMFlag, IntraLumaMPMIdx, and IntraLumaMPMRemainder are used.

IntraLumaMPMFlag is a flag that indicates whether or not the MPM list is to be used, and when IntraLumaMPMFlag is logic "1", the MPM list is used, and when IntraLumaMPMFlag is logic "0", the MPM list is not used. IntraLumaMPMIdx is a parameter that specifies an entry in the MPM list, and IntraLumaMPMRemainder is a parameter that specifies a remaining first intra prediction mode that is not registered in the MPM list.

When the first intra prediction mode of the coding target block corresponds to any of the entries in the MPM list, the IntraLumaMPMFlag is set to logic "1", and IntraLumaMPMIdx that specifies the entry is generated. Meanwhile, when the first intra prediction mode of the coding target block does not correspond to any of the entries of the MPM list, IntraLumaMPMFlag is set to logic "0". Then, the first intra prediction mode is converted to IntraLumaMPMRemainder by the procedures (P1) through (P3) described above.

Next, a generation method for the MPM list is explained. First, according to the combination of ratio H/W of height H to width W of the coding target block and ratio Hn/Wn of height Hn to width Wn of each adjacent block, the MPM generation unit 1211 changes the first intra prediction mode of the adjacent block. This change is performed independently to each of the left adjacent block and the upper adjacent block.

Here, a case is assumed in which angle A1 that indicates the first intra prediction mode of an adjacent block is an angle that is not used in the intra prediction in the shape of the coding target block. In this case, the first intra prediction mode corresponding to angle A2 that is closest to angle A1 among the angles used in the intra prediction in the shape of the coding target block is used as the first intra prediction mode after the change.

Accordingly, it becomes possible to generate an MPM list that includes first intra prediction modes that are available in the coding target block. Furthermore, among angular predictions that are available in the coding target block, an angular prediction that is closest to the angular prediction adopted in the adjacent block is included as an entry, and therefore, the prediction efficiency of the first prediction mode according to the MPM list improves.

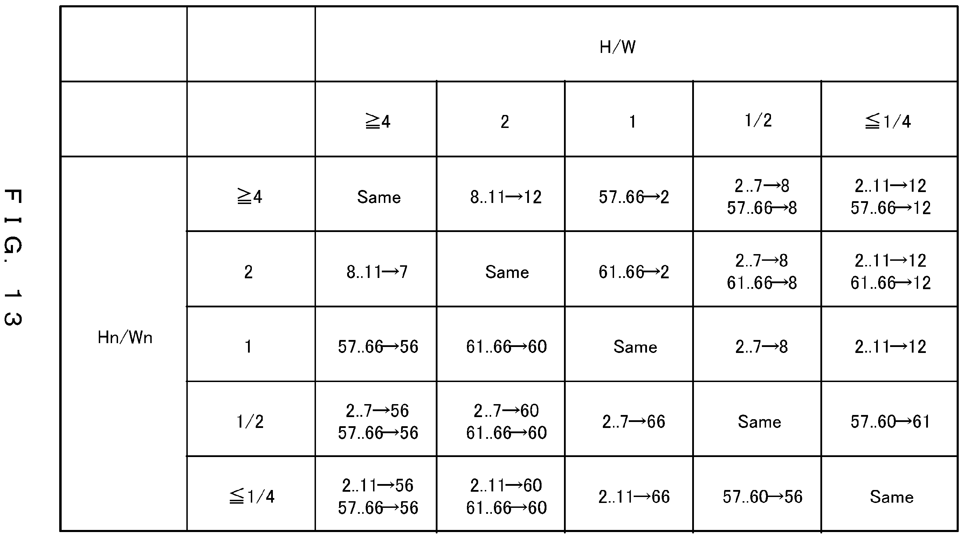

FIG. 13 illustrates an example of a changing method for the first intra prediction mode described above. Each row in the table of FIG. 13 corresponds to a prescribed value of Hn/Wn, and each column corresponds to a prescribed value of H/W. Therefore, each cell of the table corresponds to a prescribed combination of Hn/Wn and H/W.

The first row represents Hn/Wn≥4, the second row represents Hn/Wn=2, the third row represents Hn/Wn=1, the fourth row represents Hn/Wn=1/2, and the fifth row represents Hn/Wn≤1/4. The first column represents H/W≥4, the second column represents H/W=2, the third column represents H/W=1, the fourth column represents H/W=1/2, and the fifth column represents H/W≤1/4.

In each cell, "Same" or a change instruction in the format "ModeBefore→ModeAfter" is described as a changing method for the first intra prediction mode. "Same" represents an instruction not to change the first intra prediction mode, and the change instruction in the format "ModeBefore→ModeAfter" represents an instruction to change the first intra prediction mode indicated by the number of ModeBefore to the first intra prediction mode indicated by the number of ModeAfter.

For example, when Hn/Wn=W/H, the first intra prediction mode is not changed. When Hn/Wn≠W/H, only the first intra prediction mode indicated by the number of ModeBefore is changed, and other first intra prediction modes are not changed.

For example, when Hn/Wn≥4 and H/W=1, if the first intra prediction mode is any of "57" to "66", this first intra prediction mode is changed to "2". On the other hand, if the first intra prediction mode is any of "0" to "56", this first intra prediction mode is not changed.

Meanwhile, when Hn/Wn=2 and H/W=1/2, if the first intra prediction mode is any of "2" to "7" or "61" to "66", this first intra prediction mode is changed to "8". On the other hand, if the first intra prediction mode is any of "0", "1", or "8" to "60", this first intra prediction mode is not changed.

The MPM generation unit 1211 decides candModeList[0] through candModeList[2] according to the generation method in the VVC standard described above, using the first intra prediction modes changed by the changing method in FIG. 13 as candIntraPredModeA and candIntraPredModeB.

According to the video coding apparatus 1101 in FIG. 11, the first intra prediction mode of an adjacent block is changed according to the combination of the shape of the coding target block and the shape of the adjacent block. Accordingly, even in a case in which the aspect ratio of an adjacent block and the aspect ratio of the coding target block are different, an appropriate MPM list may be generated in consideration with the continuity of reference directions between blocks.

By encoding the first intra prediction mode of the coding target block using an appropriate MPM list, the probability that the MPM list will be used becomes higher, and the compression efficiency for the intra prediction parameters improves. Accordingly, it becomes possible to encode a video efficiently.

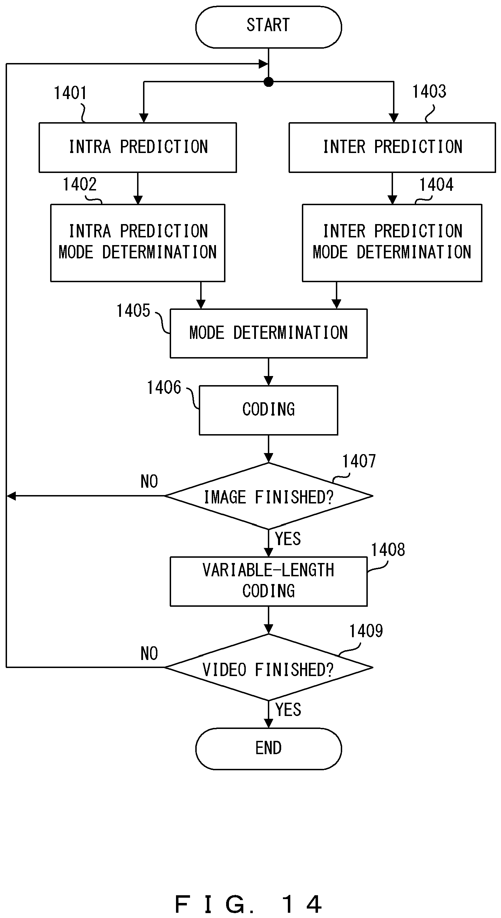

FIG. 14 is a flowchart illustrating an example of the video coding process performed by the video coding apparatus 1101 in FIG. 11. In this video coding process, a coding process is performed in units of each CU (Coding Unit) that is an example of a block.

First, the intra prediction unit 1115 performs intra prediction for a block (CU) in each block size (step 1401) . Then, the intra prediction unit 1115 performs an intra prediction mode determination and selects the intra prediction mode with the highest prediction efficiency (step 1402).

Meanwhile, the inter prediction unit 1116 performs inter prediction for a block in each block size (step 1403). The inter prediction is performed in units of each PU (Prediction Unit) obtained by further dividing the CU. Then, the inter prediction unit 1116 performs an inter prediction mode determination and selects the inter prediction mode with the highest prediction efficiency (step 1404).

Next, the mode determination unit 1114 performs a mode determination and decides which is to be applied, the intra prediction mode or the inter prediction mode, in units of a block (CU) (step 1405). Then, the subtraction unit 1111 and the conversion/quantization unit 1112 encodes the coding target block according to the prediction mode decided by the mode determination unit 1114 and generates quantized coefficients (step 1406).

Next, the video coding apparatus 1101 determines whether or not the coding of the image has been finished (step 1407) . When there remains any unprocessed block (step 1407, NO), the video coding apparatus 1101 repeats the processes in and after step 1401 for the next block.

Meanwhile, when the coding of the image has been finished (step 1407, YES), the entropy coding unit 1113 performs variable-length coding for the quantized coefficients and parameters that indicate the decided prediction modes (step 1408) .

Next, the video coding apparatus 1101 determines whether or not the coding of the video has been finished (step 1409) . When there remains any unprocessed image (step 1409, NO), the video coding apparatus 1101 repeats the processes in and after step 1401 for the next image. Then, when the coding of the video has been finished (step 1409, YES), the video coding apparatus 1101 terminates the process.

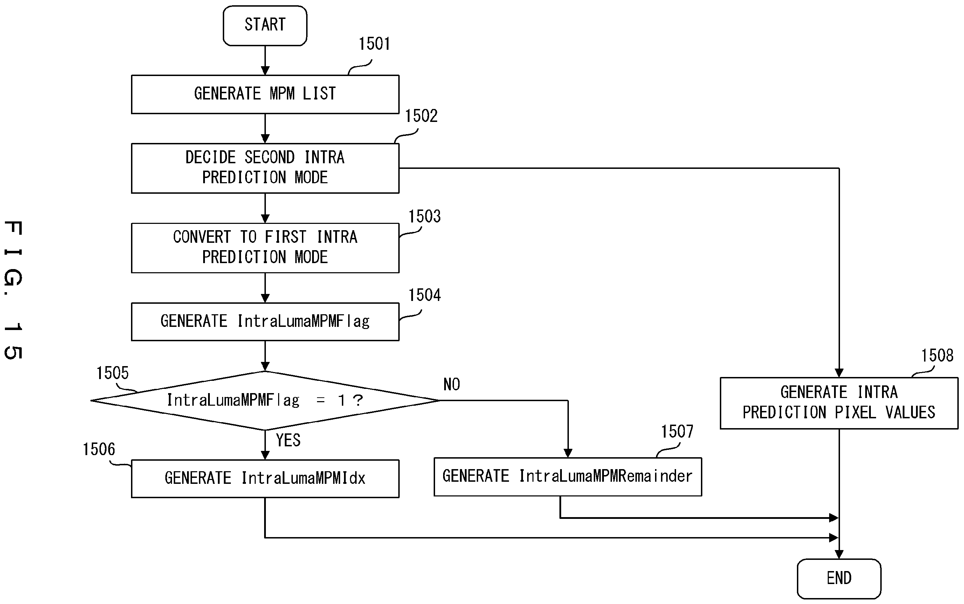

FIG. 15 is a flowchart illustrating an example of the intra prediction process in the step 1401 in FIG. 14. First, the MPM generation unit 1211 changes the first intra prediction modes of the left adjacent block and the upper adjacent block and generates an MPM list using the first intra prediction modes after the change (step 1501).

Next, the prediction mode calculation unit 1214 decides the second intra prediction mode of the coding target block (step 1502), and the prediction mode calculation unit 1212 converts the decided second intra prediction mode to the first intra prediction mode (step 1503).

Next, the coding unit 1213 generates IntraLumaMPMFlag that indicates whether or not the MPM list is to be used (step 1504) and checks the value of generated IntraLumaMPMFlag (step 1505).

When IntraLumaMPMFlag is logic "1" (step 1505, YES), the coding unit 1213 generates IntraLumaMPMIdx that indicates the entry in the MPM list corresponding to the first intra prediction mode of the coding target block. On the other hand, when IntraLumaMPMFlag is logic "0" (step 1505, NO), the coding unit 1213 generates IntraLumaMPMRemainder corresponding to the first intra prediction mode of the coding target block (step 1507).

The filter unit 1215 generates intra prediction pixel values for the coding target block in the decided second intra prediction mode (step 1508).

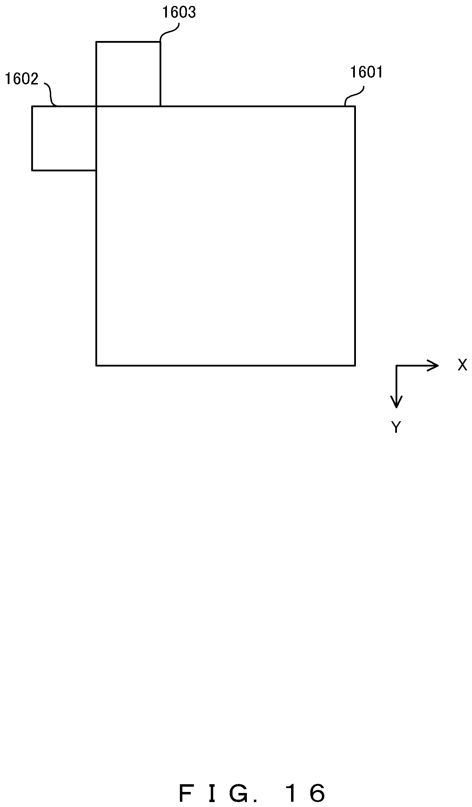

Next, with reference to FIG. 16 through FIG. 18, a method for deciding adjacent blocks to be used for the generation of the MPM list when a plurality of blocks are adjacent to the coding target block in step 1501 in FIG. 15 is explained.

FIG. 16 illustrates an example of a first adjacent block decision method. In a plurality of left adjacent blocks that are adjacent to the left side of a coding target block 1601, a left adjacent block 1602 that is located on the top is selected as the left adjacent block to be used for the generation of the MPM list. Meanwhile, in a plurality of upper adjacent blocks that are adjacent to the upper side of the coding target block 1601, an upper adjacent block 1603 that is located leftmost is selected as the upper adjacent block to be used for the generation of the MPM list.

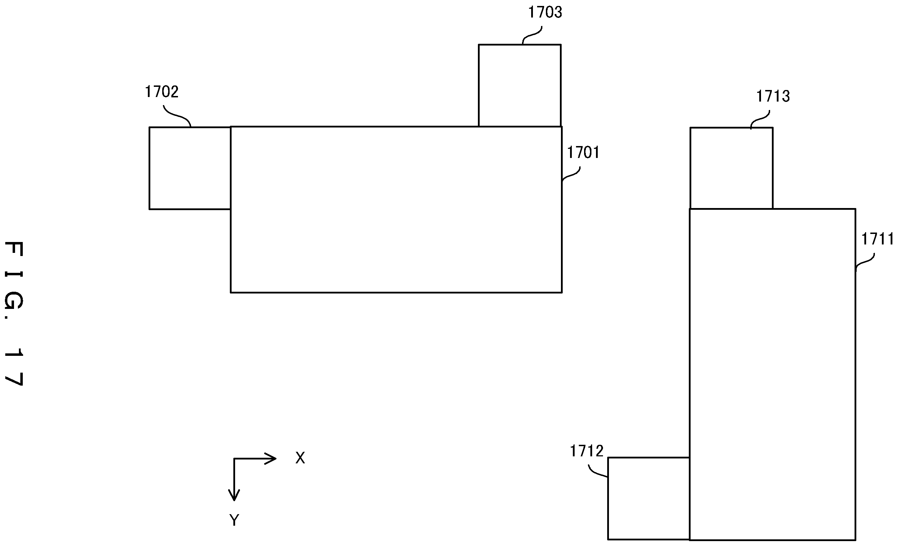

FIG. 17 illustrates an example of a second adjustment block decision method. When a coding target block 1701 is a laterally long rectangle, in a plurality of left adjacent blocks that are adjacent to the left side of the coding target block 1701, a left adjacent block 1702 that is located on the top is selected as the left adjacent block to be used for the generation of the MPM list. Meanwhile, in a plurality of upper adjacent blocks that are adjacent to the upper side of the coding target block 1701, an upper adjacent block 1703 that is located rightmost is selected as the upper adjacent block used for the generation of the MPM list.

Meanwhile, when a coding target block 1711 is a vertically long rectangle, in a plurality of left adjacent blocks that are adjacent to the left side of the coding target block 1711, a left adjacent block 1712 that is located on the bottom is selected as the left adjacent block to be used for the generation of the MPM list. Meanwhile, in a plurality of upper adjacent blocks that are adjacent to the upper side of the coding target block 1711, an upper adjacent block 1713 that is located leftmost is selected as the upper adjacent block to be used for the generation of the MPM list.

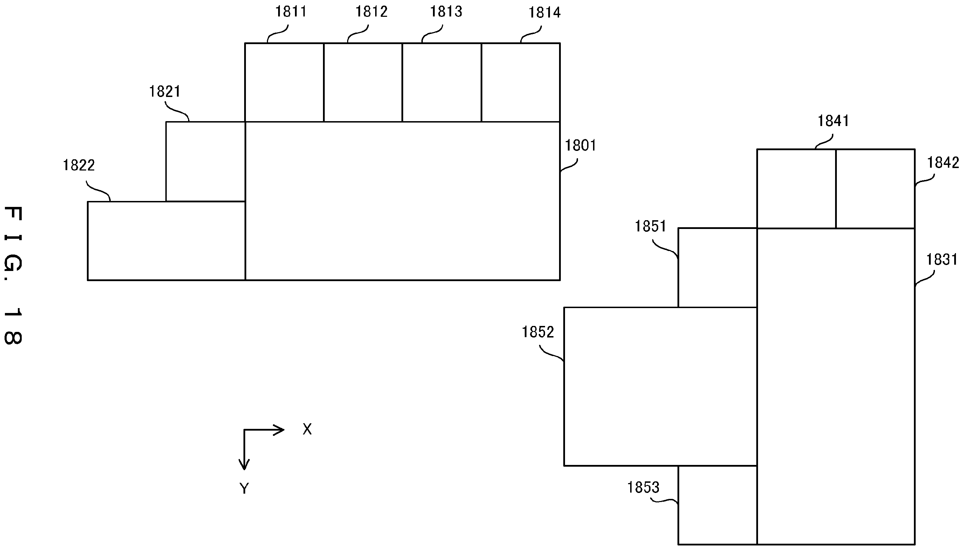

FIG. 18 illustrates an example of a third adjacent block decision method. In the third adjacent block decision method, in a plurality of left adjacent blocks that are adjacent to the left side of the coding target block, the left adjacent block that has the first intra prediction mode with the highest frequency is selected as the left adjacent block to be used for the generation of the MPM list. Meanwhile, in a plurality of upper adjacent blocks that are adjacent to the upper side of the coding target block, the upper adjacent block that has the first intra prediction mode with the highest frequency is selected as the upper adjacent block to be used for the generation of the MPM list.

By generating the MPM list using the adjacent block that has the first intra prediction mode with the highest frequency in a plurality of adjacent blocks, the prediction efficiency of the first intra prediction mode based on the MPM list improves.

For example, a case is assumed in which first intra prediction mode M1 of an upper adjacent block 1811 through an upper adjacent block 1814 that are adjacent to the upper side of a laterally long coding target block 1801 have been decided as follows.
Upper adjacent block 1811 M1=I1
Upper adjacent block 1812 M1=I2
Upper adjacent block 1813 M1=I2
Upper adjacent block 1814 M1=I3

I1 through I3 are respectively different numbers. In this case, the frequency of I1 is once, and the frequency of I2 is twice, and the frequency of I3 is once. Therefore, the upper block 1812 and the upper block 1813 that has I2 with the highest frequency are selected, and the first intra prediction mode of these blocks is adopted as the first intra prediction mode of the upper adjacent block.

When the upper adjacent blocks 1811 through the upper adjacent block 1814 respectively have different first intra prediction modes, the upper adjacent block is selected according to the first adjacent block decision method or the second adjacent block decision method. Meanwhile, when any of the upper adjacent blocks is coded in the inter prediction mode, that upper adjacent block is excluded from the counting targets for the frequency.

Regarding a left adjacent block 1821 and a left adjacent block 1822 that are adjacent to the left side of the coding target block 1801, the left adjacent block to be used for the generation of the MPM list is selected in a similar manner as in the case of the upper adjacent block 1811 through the upper adjacent block 1814.

Meanwhile, regarding an upper adjacent block 1841 and an upper adjacent block 1842 that are adjacent to the upper side of a vertically long coding target block 1831, a similar adj acent block decision method is also applied. Regarding a left adjacent block 1851 through a left adjacent block 1853 that are adjacent to the left side of the coding target block 1831, a similar adjacent block decision method is applied.

For example, a case is assumed in which first intra prediction mode M1 of the left adjacent block 1851 through the left adjacent block 1853 have been decided as follows.
Left adjacent block 1851 M1=I4
Left adjacent block 1852 M1=I5
Left adjacent block 1853 M1=I6

I4 through I6 are respectively different numbers. In this case, the frequency of all I4 through I6 is once.

However, the length of the side of the left adjacent block 1852 that is in contact with the coding target block 1831 is twice the length of the sides of the left adjacent block 1851 and the left adjacent block 1853 that are in contact with the coding target block 1831. Then, the left adjacent block 1852 with the longest side in contact with the coding target block 1831 may be selected as the left adjacent block to be used for the generation of the MPM list.

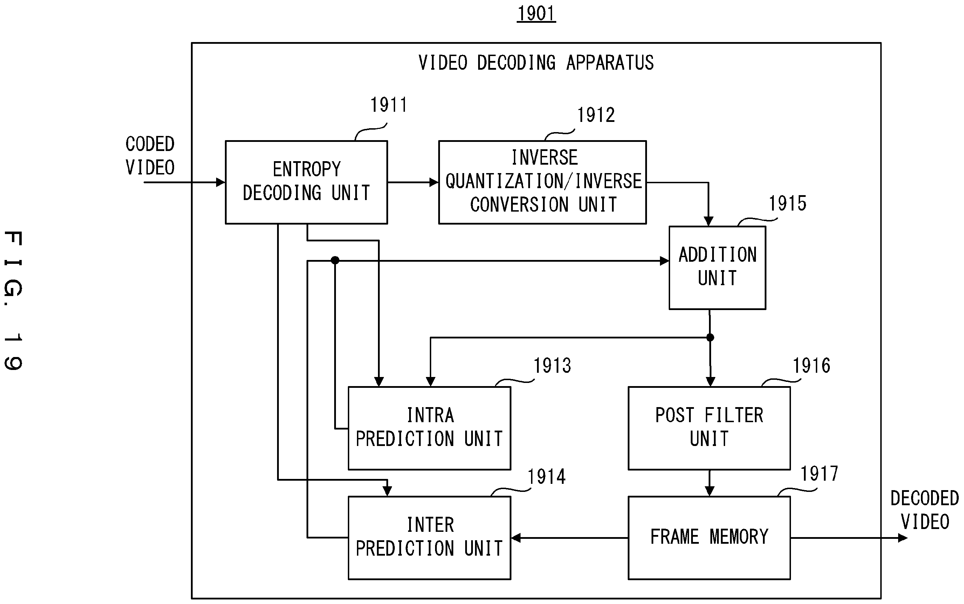

FIG. 19 illustrates a specific example of the video decoding apparatus 1001 in FIG. 10. A video decoding apparatus 1901 in FIG. 19 includes an entropy decoding unit 1911, an inverse quantization/inverse conversion unit 1912, an intra prediction unit 1913, an inter prediction unit 1914, an addition unit 1915, a post filter unit 1916, and a frame memory 1917. The entropy decoding unit 1911 corresponds to the decoding unit 1011 in FIG. 10, and the inverse quantization/inverse conversion unit 1912 and the addition unit 1915 corresponds to the restoration unit 1014.

The video decoding apparatus 1901 may be implemented as a hardware circuit, for example. In this case, the respective constituent elements of the video decoding apparatus 1901 may be implemented as separate circuits or may be implemented as a single integrated circuit.

The video decoding apparatus 1901 decodes a coded stream of an input coded video and outputs a decoded video. The video decoding apparatus 1901 may receive a coded stream from the video coding apparatus 1101 in FIG. 11 via a communication network.

For example, the image decoding apparatus 1901 may be incorporated in a video camera, a video reception apparatus, a video telephone system, a computer, or a mobile terminal apparatus.

The entropy decoding unit 1911 decodes the coded video by entropy decoding (variable-length decoding) to extract the quantized coefficients of each block in a decoding target image as prediction residual information and also extracts a parameter that indicates the prediction mode of each block. In addition, the entropy decoding unit 1911 also extracts a shape parameter that represents the shape of each block. The parameter that indicates the prediction mode includes an intra prediction parameter that indicates an intra prediction mode or an inter prediction parameter that indicates the inter prediction mode.

Then, the entropy decoding unit 1911 outputs the quantized coefficients to the inverse quantization/inverse conversion unit 1912, outputs the shape parameter and the intra prediction parameter to the intra prediction unit 1913, and outputs the inter prediction parameter to the inter prediction unit 1914.

The inverse quantization/inverse conversion unit 1912 performs inverse quantization and inverse orthogonal conversion of a quantized coefficient to restore the prediction residual and outputs the restored prediction residual to the addition unit 1915.

The intra prediction unit 1913 calculates an intra prediction pixel values for the decoding target block from decoded pixel value before the application of a post filter that is output from the addition unit 1915, using the shape parameter and the intra prediction parameter that are output from the entropy decoding unit 1911. Then, the intra prediction unit 1913 outputs the calculated intra prediction pixel value to the addition unit 1915.

The inter prediction unit 1914 performs a motion compensation process using the inter prediction parameter that are output from the entropy decoding unit 1911 and a pixel value of a reference image that is output from the frame memory 1917 to calculate an inter prediction pixel value for the decoding target block. Then, the inter prediction unit 1914 outputs the calculated inter prediction pixel value to the addition unit 1915.

The addition unit 1915 adds the prediction pixel value that is output from the intra prediction unit 1913 or the inter prediction unit 1914 and the prediction residual that is output from the inverse quantization/inverse conversion unit 1912 to generate a decoded pixel value before the application of a post filter. Then, the addition unit 1915 outputs the generated decoded pixel value to the post filter unit 1916 and the intra prediction unit 1913.

The post filter unit 1916 applies a post filter to the decoded pixel value before the application of a post filter in order to reduce the quantization error and generates a decoded pixel value after the application of a post filter. Then, the post filter unit 1916 outputs the generated decoded pixel value to the frame memory 1917.

The frame memory 1917 stores the decoded pixel value after the application of a post filter and a decoded video that includes the decoded pixel value. The decoded pixel value stored by the frame memory 1917 is output to the inter prediction unit 1914 as a pixel value of the reference image.

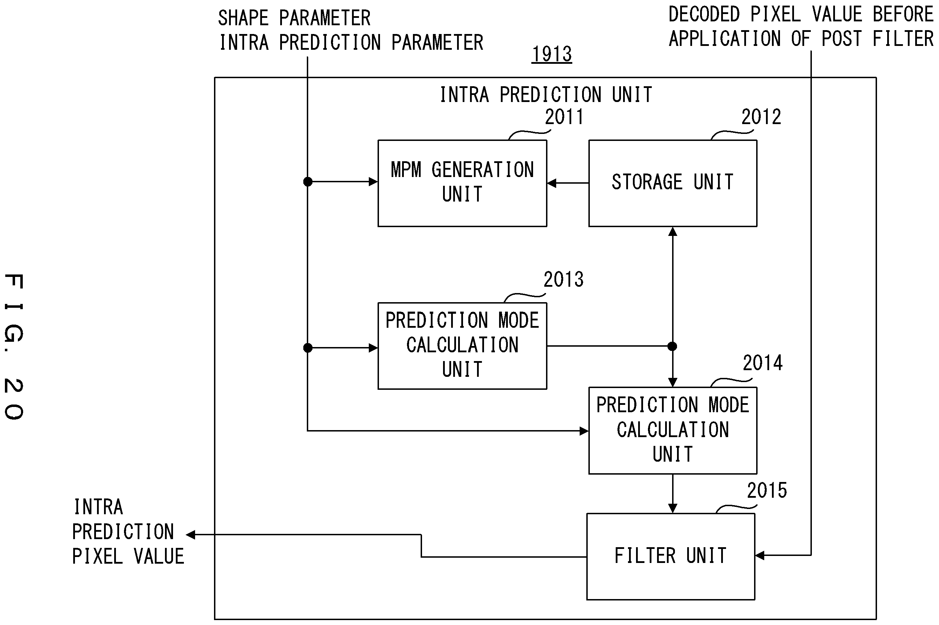

FIG. 20 illustrates a functional configuration example of the intra prediction unit 1913 in FIG. 19. The intra prediction unit 1913 in FIG. 20 includes an MPM generation unit 2011, a storage unit 2012, a prediction mode calculation unit 2013, a prediction mode calculation unit 2014, and a filter unit 2015. The MPM generation unit 2011 and the filter unit 2015 correspond to the generation unit 1012 and the prediction unit 1013 in FIG. 10, respectively.

To the MPM generation unit 2011 and the prediction mode calculation unit 2014, a shape parameter is input from the entropy decoding unit 1911. In addition, to the prediction mode calculation unit 2013, intra prediction parameters are input from the entropy decoding unit 1911. The input intra prediction parameters include IntraLumaMPMFlag and one of IntraLumaMPMIdx and IntraLumaMPMRemainder.

The storage unit 2012 stores the width, the height, and the first intra prediction mode of each block. As the first intra prediction mode of a block for which the inter prediction mode is selected, the direct current prediction is stored. Then, the storage unit 2012 outputs width Wn and height Hn of each of the left adjacent block and the upper adjacent block and the first intra prediction mode of each of the left adjacent block and the upper adjacent block to the MPM generation unit 2011.

According to the combination of the shape of a decoding target block and the shape of each adjacent block, the MPM generation unit 2011 changes the first intra prediction mode of the adjacent block by a similar changing method as in the video coding apparatus 1101 in FIG. 11. At this time, the MPM generation unit 2011 changes the first intra prediction mode of the adjacent block according to the combination of ratio H/W of height H to width W of the decoding target block and ratio Hn/Wn of height Hn to width Wn of each adj acent block. This change is performed independently to each of the left adjacent block and the upper adjacent block.

Here, a case is assumed in which angle A1 that represents the first intra prediction mode of an adjacent block is an angle that is not used in the intra prediction in the shape of the decoding target block. In this case, the first intra prediction mode corresponding to angle A2 that is closest to angle A1 among the angles used in the intra prediction in the shape of the decoding target block is used as the first intra prediction mode after the change. For example, the MPM generation unit 2011 may change the first intra prediction mode of an adjacent block according to the changing method illustrated in FIG. 13.

By changing the first intra prediction mode according to a similar changing method as in the video coding apparatus 1011, the MPM list used for the coding of the intra prediction parameter may be restored from the coded video.

The MPM generation unit 2011 generates an MPM list by the generation method in the VVC standard described above, using the first intra prediction modes of the left adjacent block and the upper adjacent block after the change and outputs the generated MPM list to the prediction mode calculation unit 2013.

The prediction mode calculation unit 2013 obtains the first intra prediction mode of the decoding target block from the input intra prediction parameter by using the MPM list and outputs the first intra prediction mode to the storage unit 2012 and the prediction mode calculation unit 2014. When IntraLumaMPMFlag is logic "1", the entry in the MPM list specified by the IntraLumaMPMIdx is output as the first intra prediction mode of the decoding target block.

Meanwhile, when IntraLumaMPMFlag is logic "0", IntraDir is obtained from IntraLumaMPMRemainder by procedures (P11) through (P13) described above, and this IntraDir is output as the first intra prediction mode of the decoding target block.

The prediction mode calculation unit 2014 converts the first intra prediction mode of the decoding target block to the second intra prediction mode, according to width W and height H of the decoding target block. The procedures in which first intra prediction mode M1 is converted to second intra prediction mode M2 are as follows.
- When W=H
   M2=M1
- When W>H
   - When 2≤M1<mL, M2=M1+65
      When W=2H, mL=8
      In other cases than W=2H (W>2H), mL=12
   - In other cases than 2≤M1<mL, M2=M1
- When W<H
   - When mH<M1≤66, M2=M1?67
      When H=2W, mH=60
      In other cases than H=2W (H>2W), mH=56
   - In other cases than mH<M1≤66, M2=M1

The filter unit 2015 applies a filter corresponding to the second intra prediction mode that is output from the prediction mode calculation unit 2014 to the decoded pixel value before the application of a post filter to generate an intra prediction pixel value for the decoding target block. Then, the filter unit 2015 outputs the generated intra prediction pixel value to the addition unit 1915.

According to the video decoding apparatus 1901 in FIG. 19, a coded video that is output from the video coding apparatus 1101 in FIG. 11 may be decoded to restore the original video.

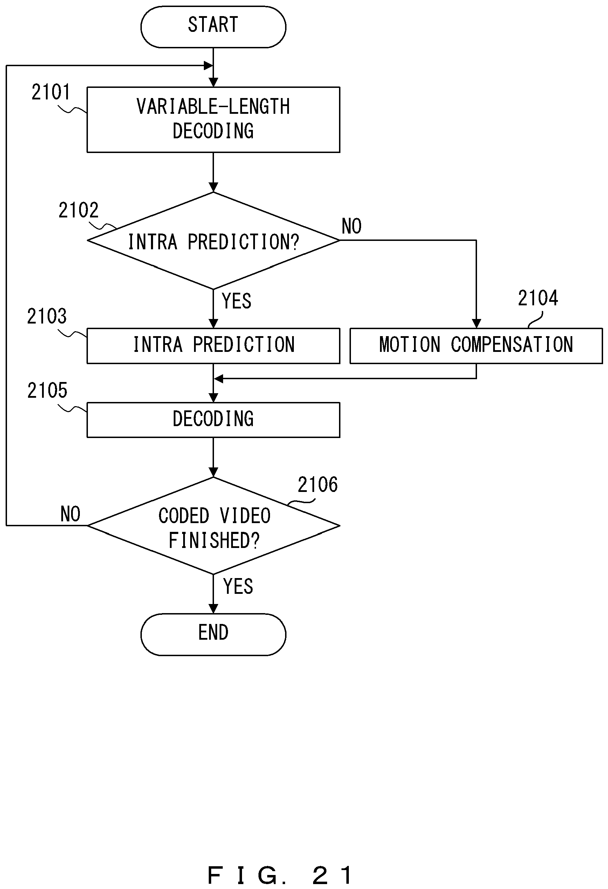

FIG. 21 is a flowchart illustrating the video decoding process performed by the video decoding apparatus in FIG. 19. In this video decoding process, a decoding process is performed in units of each CU that is an example of a block.

First, the entropy decoding unit 1911 performs variable-length decoding for a coded video to extract the quantized coefficients, the shape parameter, and a parameter that indicates the prediction mode of the decoding target block (the decoding target CU) (step 2101) . Then, the entropy decoding unit 1911 checks whether the parameter that indicates the prediction mode is an intra prediction parameter or an inter prediction parameter (step 2102).

When the parameter that indicates the prediction mode is the intra prediction parameter (step S2102, YES), the intra prediction unit 1913 performs intra prediction for the decoding target block and calculates intra prediction pixel values for the decoding target block (step 2103).

On the other hand, when the parameter that indicates the prediction mode is the inter prediction parameter (step 2102, NO), the inter prediction unit 1914 performs a motion compensation process for the decoding target block and calculates inter prediction pixel values for the decoding target block (step 2104).

Next, the inverse quantization/inverse conversion unit 1912 decodes the quantized coefficients of the decoding target block to restore the prediction residuals (step 2105) . Then, the addition unit 1915 and the post filter unit 1916 generates a decoded pixel value for the decoding target block using the restored prediction residual and the prediction pixel value that is output from the intra prediction unit 1913 or the inter prediction unit 1914.

Next, the video decoding apparatus 1901 determines whether or not the decoding of the coded video has been finished (step 2106) . When there remains any unprocessed binary string (step 2106, NO), the video decoding apparatus 1901 repeats the processes in and after step 2101 for the next binary string. Then, when the decoding of the coded video has been finished (step 2106, YES), the video decoding apparatus 1901 terminates the process.

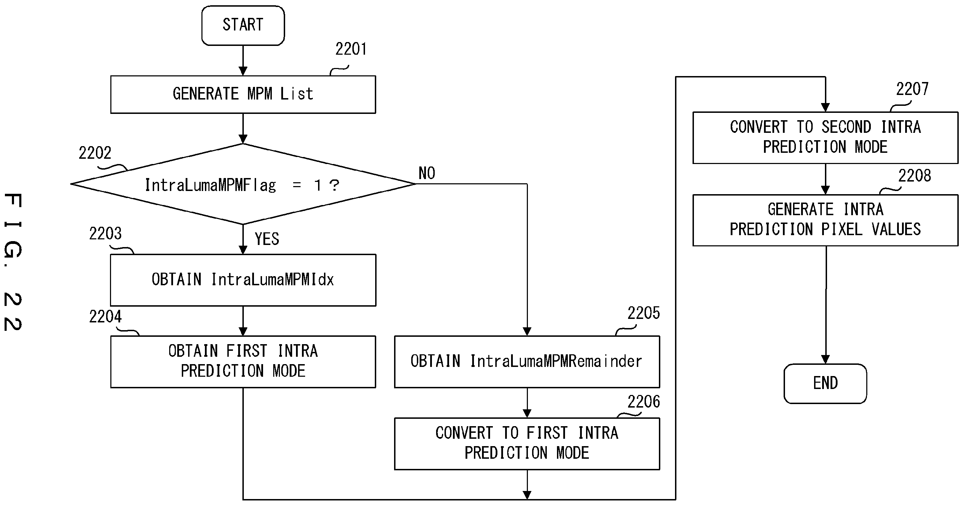

FIG. 22 is a flowchart illustrating an example of the intra prediction process in step 2103 in FIG. 21. First, the MPM generation unit 2011 changes the first intra prediction modes of the left adjacent block and the upper adjacent block and generates an MPM list using the first intra prediction modes after the change (step 2201).

Next, the prediction mode calculation unit 2013 checks the value of IntraLumaMPMFlag (step 2202). When IntraLumaMPMFlag is logic "1", the prediction mode calculation unit 2013 obtains the value of IntraLumaMPMIdx (step 2203) . Then, the prediction mode calculation unit 2013 obtains the entry in the MPM list specified by the IntraLumaMPMIdx as the first intra prediction mode of the decoding target block (step 2204).

On the other hand, when IntraLumaMPMFlag is logic "0", the prediction mode calculation unit 2013 obtains the value of IntraLumaMPMRemainder (step 2205) and converts the obtained value to the first intra prediction mode (step 2206).

Next, the prediction mode calculation unit 2014 converts the first intra prediction mode of the decoding target block to the second intra prediction mode (step 2207). Then, the filter unit 2015 generates intra prediction pixel values for the decoding target block according to the second intra prediction mode that is output from the prediction mode calculation unit 2014 (step 2208).

When a plurality of blocks are adjacent to the decoding target block in step 2201 in FIG. 22, an adjacent block to be used for the generation of the MPM list is decided in a similar manner as in the adjacent block decision method illustrated in FIG. 16 through FIG. 18. In this case, the first adjacent block decision method through the third adjacent block decision method may be applied while replacing the coding target block in FIG. 16 through FIG. 18 with the decoding target block.

The configurations of the video coding apparatus in FIG. 9 and FIG. 11 are merely an example, and a part of the constituent elements may be omitted or changed according to the purpose or conditions of the video coding apparatus. The configuration of the intra prediction unit 1115 in FIG. 12 is merely an example, and a part of the constituent elements may be omitted or changed according to the purpose or conditions of the video coding apparatus. The video coding apparatus may adopt a coding system other than WC.

The configurations of the video decoding apparatus in FIG. 10 and FIG. 19 are merely an example, and a part of the constituent elements may be omitted or changed according to the purpose or conditions of the video decoding apparatus. The configuration of the intra prediction unit 1913 in FIG. 20 is merely an example, and a part of the constituent elements may be omitted or changed according to the purpose or conditions of the video decoding apparatus. The video decoding apparatus may adopt a decoding system other than WC.

The flowcharts illustrated in FIG. 14, FIG. 15, FIG. 21, and FIG. 22 are merely an example, and a part of the processes may be omitted or changed according to the configuration or conditions of the video coding apparatus or the video decoding apparatus.

The coding target blocks illustrated in FIG. 2, FIG. 8, and FIG. 16 through FIG. 18 and the left adjacent blocks and the upper adjacent blocks illustrated in FIG. 16 through FIG. 18 are merely an example, and the shapes of these blocks change according to the video that is input. The adjacent block decision methods illustrated in FIG. 16 through FIG. 18 are merely an example, and an adjacent block to be used for the generation of the MPM list may be decided according to another adjacent block decision method.

The changing method for the first intra prediction mode illustrated in FIG. 13 is merely an example, and the first intra prediction mode of a adjacent block may be changed according to another changing method.

The video coding apparatus in FIG. 9 and FIG. 11 and the video decoding apparatus in FIG. 10 and FIG. 19 may be implemented as a hardware circuit, and may also be implemented using an information processing apparatus (computer).

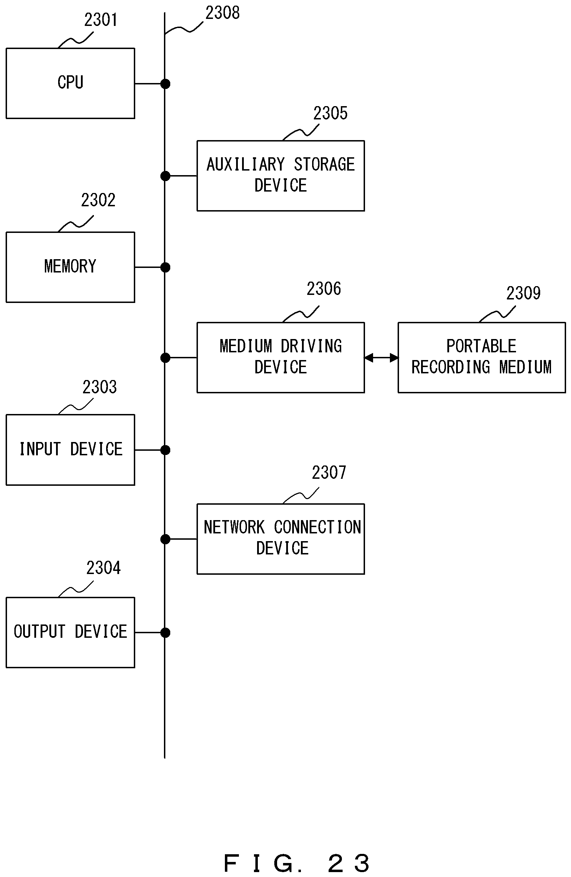

FIG. 23 illustrates a configuration example of an information processing apparatus used as the video coding apparatus 901, the video decoding apparatus 1001, the video coding apparatus 1101, and the video decoding apparatus 1901. The information processing apparatus in FIG. 23 includes a CPU (Central Processing Unit) 2301, a memory 2302, an input device 2303, an output device 2304, an auxiliary storage device 2305, a medium driving device 2306, and a network connection device 2307. These constitute elements are connected with each other by a bus 2308.

The memory 2302 is, for example, a semiconductor memory such as a ROM (Read Only Memory), RAM (Random Access Memory), a flash memory, and the like, and stores a program and data used for processes . The memory 2302 may be used as the frame memory 1120 in FIG. 11, the frame memory 1917 in FIG. 19, or the storage unit 2012 in FIG. 20.

The CPU 2301 (processor) operates, for example, by executing a program using the memory 2302, as the generation unit 911, the prediction unit 912, the first coding unit 913, and the second coding unit 914 in FIG. 9.

The CPU 2301 also operates, by executing a program using the memory 2302, as the decoding unit 1011, the generation unit 1012, the prediction unit 1013, and the restoration unit 1014 in FIG. 10.

The CPU 2301 also operates, by executing a program using the memory 2302, as the subtraction unit 1111, the conversion/quantizationunit 1112, the entropy coding unit 1113, and the mode determination unit 1114 in FIG. 11. The CPU 2301 also operates, by executing a program using the memory 2302, as the intra prediction unit 1115, the inter prediction unit 1116, the inverse quantization/inverse conversion unit 1117, the addition unit 1118, and the post filter 1119.

The CPU 2301 also operates, by executing a program using the memory 2302, as the MPM generation unit 1211, the prediction mode calculation unit 1212, the coding unit 1213, the prediction mode calculation unit 1214, and the filter unit 1215.

The CPU 2301 also operates, by executing a program using the memory 2302, as the entropy decoding unit 1911, the inverse quantization/inverse conversion unit 1912, the intra prediction unit 1913, and the inter prediction unit 1914 in FIG. 19. The CPU 2301 also operates, by executing a program using the memory 2302, as the addition unit 1915 and the post filter unit 1916.

The CPU 2301 also operates, by executing a program using the memory 2302, as the MPM generation unit 2011, the prediction mode calculation 2013, the prediction mode calculation unit 2014, and the filter unit 2015 in FIG. 20.

The input device 2303 is, for example, a keyboard, a pointing device or the like, which is used for the input of instructions and information from the user or the operator. The output device 2304 is, for example, a display apparatus, a printer, a speaker or the like, which is used for the output of inquiries to the user or the operator and a processing result. The processing result may be a decoded video.

The auxiliary storage device 2305 is, for example, a magnetic disk device, an optical disk device, a magneto-optical disk device, a tape device, or the like. The auxiliary storage device 2305 may also be a hard disk drive. The information processing apparatus may store a program and data in the auxiliary storage device 2305 and may load them onto the memory 2302 to use them.

The medium driving device 2306 drives the portable recording medium 2309 and accesses its recorded contents. The portable recording medium 2309 is a memory device, a flexible disk, an optical disk, a magneto-optical disk, or the like. The portable recording medium 2309 may also be a CD-ROM (Compact Disk Read Only Memory), DVD (Digital Versatile Disk), or a USB (Universal Serial Bus) memory. The user or the operator may store a program and data in this portable recording medium 2309 and may load them onto the memory 2302 to use them.

Thus, computer-readable recording media that store a program and data used for processes include a physical (non-transitory) recording medium such as the memory 2302, the auxiliary storage device 2305, and the portable recording medium 2309.

The network connection device 2307 is a communication interface circuit that is connected to a communication network such as a LAN (Local Area Network), a WAN (Wide Area Network), or the like and that performs data conversions involved in the communication. The network connection device 2307 may transmit a coded video to a video decoding apparatus and may receive a coded video from a video coding apparatus. The information processing apparatus may receive a program and data from an external apparatus via the network connection device 2307 and may load them onto the memory 2302 to use them.

Meanwhile, the information processing apparatus does not need to include all the constituent elements in FIG. 23, and a part of the constituent elements may be omitted according to the purpose or conditions. For example, when the interface with the user or the operator is not needed, the input device 2303 and the output device 2304 may be omitted. In addition, when the information processing apparatus does not access the portable recording medium 2309, the medium driving device 2306 may be omitted.

While embodiments of the disclosure and its advantages have been described in detail, a person skilled in the art may make various changes, additions, and omissions, without departing from the scope of the prevent invention described in the claims.

## Claims

1. A video coding apparatus comprising:
a generation unit that changes, according to a combination of a shape of a coding target block in an image included in a video and a shape of a coded block that is adjacent to the coding target block, first prediction mode information that indicates an intra prediction mode used for coding of the coded block to second prediction mode information and that generates candidate information including a candidate value for prediction mode information, by using the second prediction mode information;
a prediction unit that generates an intra prediction pixel value for the decoding target block in a prescribed intra prediction mode;
a first coding unit that encodes the coding target block by using the intra prediction pixel value; and
a second coding unit that encodes prediction mode information that indicates the prescribed intra prediction mode, by using the candidate information.

2. The video coding apparatus according to claim 1, wherein
when a first angle indicated by the intra prediction mode used for coding of the coded block is an angle that is not used in intra prediction in the shape of the coding target block, the generation unit uses, as the second prediction mode information, prediction mode information corresponding to an intra prediction mode indicating a second angle that is closest to the first angle among angles that are used in the intra prediction in the shape of the coding target block.

3. The video coding apparatus according to claim 1 or 2, wherein
the generation unit generates the candidate information by using, among a plurality of coded blocks that are adjacent to a side of the coding target block, a coded block that has first prediction mode information with a highest frequency.

4. A video coding method executed by a video coding apparatus, the video coding method comprising:
changing, by the video coding apparatus, according to a combination of a shape of a coding target block in an image included in a video and a shape of a coded block that is adjacent to the coding target block, first prediction mode information that indicates an intra prediction mode used for coding of the coded block to second prediction mode information;
generating, by the video coding apparatus, candidate information including a candidate value for prediction mode information by using the second prediction mode information;
generating, by the video coding apparatus, an intra prediction pixel value for the coding target block in a prescribed intra prediction mode;
encoding, by the video coding apparatus, the coding target block by using the intra prediction pixel value; and
encoding, by the video coding apparatus, prediction mode information that indicates the prescribed intra prediction mode, by using the candidate information.

5. A video coding program for causing a computer to execute a process comprising:
changing, according to a combination of a shape of a coding target block in an image included in a video and a shape of a coded block that is adjacent to the coding target block, first prediction mode information that indicates an intra prediction mode used for coding of the coded block to second prediction mode information;
generating candidate information including a candidate value for prediction mode information by using the second prediction mode information
generating an intra prediction pixel value for the coding target block in a prescribed intra prediction mode;
encoding the coding target block by using the intra prediction pixel value; and
encoding prediction mode information that indicates the prescribed intra prediction mode, by using the candidate information.

6. A video decoding apparatus comprising:
a decoding unit that decodes a coded video and extracts prediction residual information for a decoding target block in a coded image included in the coded video, prediction mode information that indicates an intra prediction mode of the decoding target block, and first prediction mode information that indicates an intra prediction mode of a decoded block that is adjacent to the decoding target block;
a generation unit that changes, according to a combination of a shape of the decoding target block and a shape of the decoded block, the first prediction mode information to second prediction mode information and that generates candidate information including a candidate value for prediction mode information, by using the second prediction mode information;
a prediction unit that generates an intra prediction pixel value for the decoding target block in an intra prediction mode indicated by the prediction mode information of the decoding target block, by using the candidate information; and
a restoration unit that generates a pixel value for the decoding target block by using the intra prediction pixel value and the prediction residual information.

7. The video decoding apparatus according to claim 6, wherein
when a first angle indicated by an intra prediction mode used for coding of the decoded block is an angle that is not used in intra prediction in the shape of the decoding target block, the generation unit uses, as the second prediction mode information, prediction mode information corresponding to an intra prediction mode indicating a second angle that is closest to the first angle among angles that are used in the intra prediction in the shape of the decoding target block.

8. The video decoding apparatus according to claim 6 or 7, wherein
the generation unit generates the candidate information by using, among a plurality of decoded block that are adjacent to a side of the decoding target block, a decoded block that has first prediction mode information with a highest frequency.

9. A video decoding method executed by a video decoding apparatus, the video decoding method comprising:
decoding, by the video decoding apparatus, a coded video and extracting prediction residual information for a decoding target block in a coded image included in the coded video, prediction mode information that indicates an intra prediction mode of the decoding target block, and first prediction mode information that indicates an intra prediction mode of a decoded block that is adjacent to the decoding target block;
changing, by the video decoding apparatus, according to a combination of a shape of the decoding target block and a shape of the decoded block, the first prediction mode information to second prediction mode information;
generating, by the video decoding apparatus, candidate information including a candidate value for prediction mode information, by using the second prediction mode information;
generating, by the video decoding apparatus, an intra prediction pixel value for the decoding target block in an intra prediction mode indicated by the prediction mode information of the decoding target block, by using the candidate information; and
generating, by the video decoding apparatus, a pixel value for the decoding target block by using the intra prediction pixel value and the prediction residual information.

10. A video decoding program for causing a computer to execute a process comprising:
decoding a coded video and extracting prediction residual information for a decoding target block in a coded image included in the coded video, prediction mode information that indicates an intra prediction mode of the decoding target block, and first prediction mode information that indicates an intra prediction mode of a decoded block that is adjacent to the decoding target block;
changing, according to a combination of a shape of the decoding target block and a shape of the decoded block, the first prediction mode information to second prediction mode information;
generating candidate information including a candidate value for prediction mode information, by using the second prediction mode information;
generating an intra prediction pixel value for the decoding target block in an intra prediction mode indicated by the prediction mode information of the decoding target block, by using the candidate information; and
generating a pixel value for the decoding target block by using the intra prediction pixel value and the prediction residual information.
